# EUROPEAN PATENT SPECIFICATION

(11) **EP 4 454 793 B1**
(45) Date of publication and mention of the grant of the patent: **18.11.2026**
(21) Application number: 22935582.1
(22) Date of filing: 19.08.2022
(51) Int. Cl.: B23B 31/00, B23Q 3/155, B23Q 17/00

(54) **DISPLACEMENT DETECTION METHOD, DISPLACEMENT DETECTION DEVICE, AND MACHINE TOOL**
VERSCHIEBUNGSERKENNUNGSVERFAHREN, VERSCHIEBUNGSERKENNUNGSVORRICHTUNG UND WERKZEUGMASCHINE
PROCÉDÉ DE DÉTECTION DE DÉPLACEMENT, DISPOSITIF DE DÉTECTION DE DÉPLACEMENT ET MACHINE-OUTIL

(30) Priority: 28.03.2022 JP 2022051017; 08.08.2022 JP 2022126105
(43) Date of publication of application: 30.10.2024
(73) Proprietor: Tokyo Seimitsu Co., Ltd., Hachioji-shi, Tokyo 192-8515 (JP)
(72) Inventor: FUKUOKA Yuta, Tsuchiura-shi, Ibaraki 300-0015 (JP); SEKINE Hiroki, Tsuchiura-shi, Ibaraki 300-0015 (JP)
(74) Representative: Seemann & Partner Patentanwälte mbB
(86) International application number: PCT/JP2022/031343
(87) International publication number: WO 2023/188451

(56) References cited:
- WO-A1-2021/065353
- JP-A- 2002 200 542
- JP-A- 2002 331 442
- JP-A- 2004 276 145
- JP-A- 2010 142 934

## Description

### [Technical Field]

The present invention relates to a displacement detection method and a displacement detection device for detecting a displacement from a reference state of a tool holder to which a tool is attached and a machine tool having the displacement detection device.

### [Background Art]

A machining center (MC) is a device that automatically selects various tools according to a machining process, automatically attaches the selected tools to a spindle, and performs various types of machining. In the MC, tools are changed using an automatic tool change (ATC: automatic tool holder change) device. The ATC device automatically takes out a tool holder to which a tool is attached, from a tool magazine and automatically attaches the taken-out tool holder to a spindle. The tool holder to which the tool is attached has a tapered fitting portion, and this fitting portion is fitted into a tapered fitted portion formed in the spindle of the MC. However, if chips or the like adhere to the fitting portion of a tool holder, a tool holder may be attached in a state that an axis of a tool holder is tilted. If machining is performed in this state, a shake (displacement from a reference state) will occur in the tool with rotation, and the machining accuracy of the workpiece will drop significantly.

As a technology for detecting a displacement from a reference state of a tool holder which occurs due to an abnormal attachment state (chuck error) or the like of the tool holder, JP 2002-200542 A discloses "a machine tool in which a tool holder to which a tool is attached is attached to a spindle, the spindle is rotationally driven to process a workpiece, the machine tool including a measuring means for measuring a displacement of an outer circumferential surface of a flange of the tool holder attached to the spindle and a determination means for determining an abnormality in the machine tool from measurement data obtained from the measuring means". Furthermore, JP 2002-200542 A also discloses that "the machine tool further includes a basic data storage means for storing measurement data of the displacement of the outer circumferential surface of the flange of the tool holder attached to the spindle as basic data, and a true measurement data calculation means to calculate true measurement data by comparing the basic data with the measurement data measured by the measuring means, and the determination means determines an abnormality in the machine tool from the true measurement data calculated by the true measurement data calculation means".

In addition, JP 2002-200542 A also discloses that "if the tool holder 2 has a notch, as shown in Fig. 10(b), the phase of the measurement data is corrected so that the center of any one notch 2C of the two notches 2C is 0°", and "a calculated magnetic uneven pattern (magnetic pattern during machining) and a magnetic uneven pattern during setup (magnetic pattern during setup) stored in a memory 20 are compared and a position of the calculated magnetic uneven pattern corresponding to 0° is determined".

Further, according to JP 2008-93750 A, an eddy current sensor is provided as an outer circumferential surface detection means provided close to an outer circumferential surface of a flange, and when there is a notch in the flange portion of a tool holder, the detection data of the surface position of the outer circumferential surface of the flange detected by the sensor at a predetermined period is interpolated to calculate interpolated detection data with an interpolation period shorter than a predetermined period and generate interpolated data.

Furthermore, in paragraph 0026 and the like of JP 2008-93750 A, it is stated that the detection accuracy and resolution of detectors such as eddy current sensors decrease as the detection distance increases, and that the distance of the notch portion changes rapidly in the detection direction, so that when the average distance of this portion is detected, the detection signal becomes dull. Therefore, JP 2008-93750 A describes that correction is performed so that the larger the detection distance becomes, the smaller the value of the detection data of the notch portion becomes.

### [Citation List]

### [Patent Literature]

JP 2002-200542 A
JP 2008-93750 A

### [Summary of Invention]

### [Technical Problem]

In the method of measuring the displacement of the outer circumferential surface of the flange of the tool holder and detecting the displacement from the reference state caused by chuck errors or the like, or in the method of detecting chuck errors using this, it is necessary to find the relative difference between pieces of measurement data from a sensor. For this purpose, it is necessary to perform phase correction on each piece of measurement data. Regarding this phase correction, JP 2002-200542 A describes a method that uses a signal derived from a notch in a flange or a characteristic magnetic uneven pattern.

However, in recent years, as the machining accuracy of tool holders has improved, the shape deviation of the flange portion has become significantly smaller than before. Therefore, the present inventors have found that it is becoming difficult to find a characteristic magnetic uneven pattern unique to a tool holder, as in the method described in JP 2002-200542 A. This is because the characteristic magnetic uneven pattern is obtained due to the non-uniformity (deviation) in shape inherent to each tool holder (typically the flange portion).

Furthermore, the present inventors have also found that even if an attempt is made to perform phase correction using a signal derived from the notch, for example, if a flange portion has two notches and the notches are arranged at 180-degree symmetrical positions, a magnetic uneven pattern that is close to the 180-degree rotational symmetry occurs. Thus, for example, the phase cannot be determined only by comparing the magnetic pattern during machining and the magnetic pattern during setup.

In addition, according to JP 2008-93750 A, interpolation of data can reduce errors in shake measurement due to the influence of notches in the flange portion. However, if there is a deviation in the sampling start position or unevenness in the rotation speed, the detection data of the surface position of the outer circumferential surface of the flange may become inaccurate and the eccentricity may not be calculated with high accuracy.

Further, for example, if a shake occurs due to the trapping of chips, complicated processing is required when there are two notches and the sampling start position is largely shifted, or when there is a lot of noise or the like. Therefore, detectors such as eddy current sensors must be installed in locations where they are not affected by coolant to ensure more stable and highly accurate measurements.

The present invention has been made to solve the above-mentioned problems of the prior art, and enable matching phases of pieces of measurement data in the reference state and during displacement detection easily and accurately regardless of sensor types, the number of notches in the outer circumferential surface of a flange of a tool holder, the symmetry of a rotation direction, changes in the shape of a flange portion 11B (particularly the thickness of a measurement portion), magnetization, quenching depth, engraving, environment, and the like, and improve the detection accuracy of the displacement from a reference state of a tool holder, which occurs due to a chuck error (attachment abnormality) of a spindle of a tool holder, or the like.

It is an object of the present invention to improve the detection accuracy of a chuck error detection method that applies the displacement detection described above to detect an attachment abnormality of the tool holder attached to a spindle.

### [Solution to Problem]

The object is solved by a displacement detection method for detecting a displacement from a reference state of a tool holder according to claim 1 and by a displacement detection device that detects a displacement from a reference state of a tool holder according to claim 3. Advantageous embodiments are described in the dependent claims. Moreover, the object is also solved by a machine tool according to claim 5.

### [Effect of the Invention]

According to the present invention, it is possible to match phases of measurement data in the reference state and during displacement detection easily and accurately regardless of sensor types, the number of notches in the outer circumferential surface of a flange of a tool holder, the symmetry of a rotation direction, changes in the shape of a flange portion 11B (particularly the thickness of a measurement portion), magnetization, quenching depth, engraving, environment, and the like, and improve the detection accuracy of the displacement from a reference state of a tool holder which occurs due to a chuck error (attachment abnormality) or the like. According to another object of the present invention, it is also possible to improve the detection accuracy of a chuck error detection method that applies the displacement detection described above to detect an attachment abnormality of the tool holder attached to a spindle.

For example, the reference state is assumed to be "during setup" where chuck errors do not occur. During setup, the tool holder is attached to the spindle without any chuck errors, and rotation of the tool (that is, the tool holder) is started. Next, a change in the signal from the sensor is detected and counting of the number of notches formed in the flange portion is started. After rotating the tool holder at least once, the time T taken to obtain the measurement data during setup (in the reference state) from the sensor from the notch detected last and the count N at that time are stored. Next, the displacement is detected "during machining". During machining, the rotation of the tool is started in the same procedure as during setup, and the count N and time T are made to correspond to each other to obtain measurement data. Since the measurement data during setup and the measurement data during machining are obtained in a state where the time T and the count N correspond to each other, the pieces of measurement data are in phase and therefore, the pieces of data can be compared easily without comparing the data waveforms. Based on the results of this comparison, a displacement can be detected and chuck errors can be determined accordingly.

### [Brief Description of Drawings]

Fig. 1 is a block diagram of a tool holder attachment state detection device according to an embodiment.
Fig. 2 is a plan view showing the relationship between a tool holder in Fig. 1 and a data processing device.
Fig. 3 is a flowchart during setup in one embodiment.
Fig. 4 is a time chart during setup and machining in one embodiment.
Fig. 5 is a flowchart during machining in one embodiment.
Fig. 6 is a graph showing measurement data (displacement) for one rotation in one embodiment.
Fig. 7 is a flowchart (continuation of Fig. 5) for determining the eccentricity in one embodiment.
Fig. 8 is a functional block diagram of a machine tool including a displacement detection device according to an embodiment.
Fig. 9 is a flowchart for obtaining measurement data in a reference state using a displacement detection device.
Fig. 10 is a flowchart of a displacement detection method.

### [Description of Embodiments]

### (Explanation of terms)

First, the terms used in the present specification will be explained. Note that terms not explained below shall be used with meanings commonly understood by those skilled in the art based on the common general knowledge at the time of filing of this application.

In the present specification, the term "reference state" refers to a state that serves as a relative reference for displacement detection. That is, the displacement detection method of the present invention is for detecting a relative displacement from the position of a tool holder in this reference state. The reference state is not particularly limited and may be any state, but when the detected displacement of the tool holder is used to determine chuck errors, it is preferable that the reference state is a state in which no chuck errors occur. Preferably, such a state is during setup of a machine tool, that is, before machining a workpiece.

However, the "reference state" in the displacement detection method in the present specification is not limited to the above, and may include a state in which machining of a workpiece has already started, and a state in which no tool is attached to the tool holder (a state in which a tool holder without tool is attached to a spindle).

Furthermore, in the present specification, "displacement" refers to a relative change in the rotational position during displacement detection (during chuck error detection) from the rotational position in the reference state of the tool holder. Typically, the "displacement" refers to a state in which the rotation axis of the tool holder is tilted or moved compared to the reference state, causing a "shake" in its rotation.

Furthermore, in the present specification, "measurement data A" means measurement data in the reference state, and "measurement data B" means measurement data during displacement detection. By comparing the measurement data A and the measurement data B, a displacement of the tool holder can be detected. Furthermore, by acquiring the measurement data A "during setup" and acquiring the measurement data B "during machining," chuck errors can be determined based on the displacement described above.

### (Tool holder attachment state detection method and device)

A typical example of the tool holder being displaced when compared with the reference state is a state in which a chuck error of the tool holder occurs during machining, that is during displacement detection, with respect to the reference state, that is during setup.

In the following, one application example of a displacement detection method of the present invention will be described, in which the reference state is taken as the setup time, and detects whether a displacement has occurred in the tool holder during machining, and this is used to determine a chuck error of the tool holder, and the configuration of a displacement detection device for detecting this will be explained.

A machining center (MC) is a numerically controlled machine tool that performs various types of machining such as milling, drilling, boring, and screw tapping with a workpiece attached thereto by only one machine. A large number of cutting tools 9 are stored in a tool magazine of the MC, and the tools 9 are automatically changed under computer control to perform machining of the workpiece. Since the main purpose is machining, the environment in which the MC is installed often contains fine particles of oil mist and dust, and in addition, there are often dust and chips around the workpiece and the spindle.

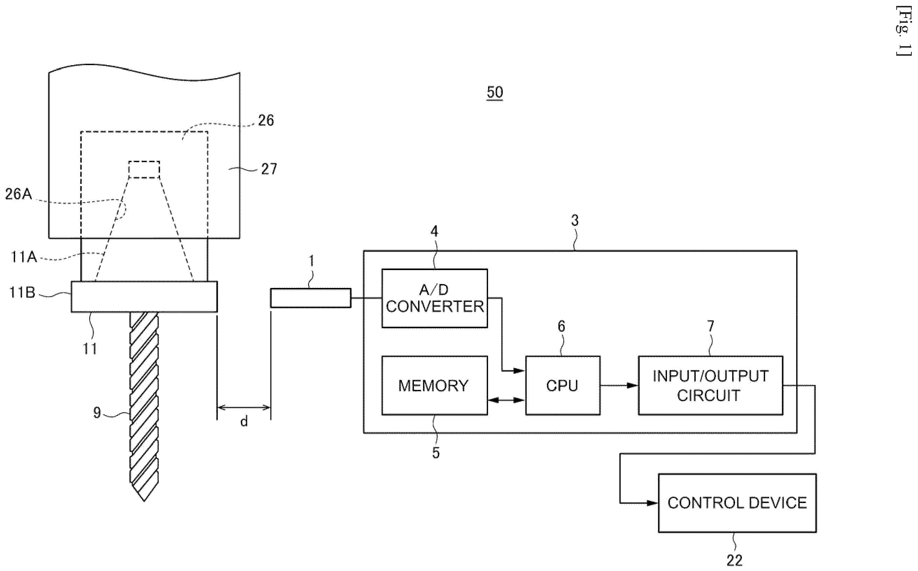

Fig. 1 is a block diagram showing an embodiment of a tool holder attachment state detection device 50 incorporated in a machine tool. Fig. 1 shows a side view of a tool holder 11. The tool holder attachment state detection device 50 is a device that automatically detects a chuck error (attachment abnormality) of the tool holder 11 attached to a spindle 26 using an ATC device (not shown). The tool holder attachment state detection device 50 mainly includes a sensor 1 as a measuring means and a data processing device 3 as an attachment state determination means.

The tool 9 is automatically attached to and detached from the spindle 26 by the ATC device. The attachment and detachment is performed by a control device 22 of the MC executing a program. The tool 9 can be integrally attached to the tool holder 11. A fitting portion 11A of the tool holder 11 is pressed against a tapered fitted portion 26A of the spindle 26. As a result, the fitting portion 11A and the fitted portion 26A come into close contact, and the tool holder 11 is attached (chucked) to the spindle 26, and as a result, the tool 9 is fixed to the spindle 26.

The sensor 1 is a measuring means that measures the distance d to the outer circumferential surface of the flange portion 11B of the tool holder 11 as an electrical signal. The sensor 1 may be an eddy current sensor. The sensor 1 is not limited to an eddy current sensor, and may be any other sensor type as long as the sensor 1 can measure the distance d from a certain measurement point to the outer circumferential surface of the tool holder 11. In this case, the sensor 1 is not limited to a non-contact-type sensor, but may be a contact-type sensor. Further, the MC uses various types of tools 9 depending on the machining content. Therefore, the number of tool holders 11 increases according to the number of tools 9. The sensor 1 is required to be compatible with these many tool holders 11.

An eddy current sensor is a sensor that uses a high-frequency magnetic field to measure the distance d. An eddy current sensor generates a high-frequency magnetic field by passing a high-frequency current through an internal coil. A feature of eddy current sensors is that it requires a linearization circuit to correct the linearity, so the measured distance d is short, but it is resistant to harsh environments where water, oil, and the like are scattered.

An optical sensor is a sensor that emits visible light, infrared rays, and the like from a light projector, detects changes in the light reflected by a detection object with a light receiver, and obtains an output signal. A laser sensor is a sensor that uses laser light instead of visible light or infrared light. A feature of optical sensors and laser sensors is that they can increase the measured distance d, but they are vulnerable to harsh environments where water, oil, and the like are scattered.

Contact-type sensors are resistant to harsh environments where water, oil, and the like are scattered, but it is difficult to install them at arbitrary locations. Therefore, non-contact-type sensors such as eddy current sensors, optical sensors, laser sensors, and the like, which can perform accurate measurements even in harsh environments where water, oil, and the like are scattered, and whose attachment position can be freely set are preferred as the sensor 1.

When an eddy current sensor is used as the sensor 1, since the measurement distance is short, it is desirable to attach a head 27 to which the spindle 26 is attached.

When using an eddy current sensor, when the outer circumferential surface of the flange portion 11B is measured, the shape to be measured, that is, the outer circumferential shape of the flange portion 11B estimated from the change in the distance d, may not be a perfect circle due to the influence of magnetization, the thickness (area) of the measurement portion and the like. Therefore, when an eddy current sensor is used as the sensor 1, simply measuring the outer circumferential surface of the flange portion 11B only during machining may include an error when calculating the eccentricity, and the detection accuracy may deteriorate.

The data processing device 3 detects the attachment state of the tool holder 11 based on the distance d measured by the sensor 1, and includes an A/D converter 4, a CPU 6, a memory 5, an input/output circuit 7, and the like. The A/D converter 4 converts the electrical signal indicating the distance d outputted from the sensor 1 into a digital signal and outputs the digital signal to the CPU 6. The CPU 6 determines the eccentricity based on the measurement data from the sensor 1 converted into this digital signal. Then, the calculated eccentricity is compared with an allowable value, and if the eccentricity exceeds the allowable value, it is determined that a chuck error (attachment abnormality) has occurred. The data processing device 3 then outputs the result to the control device 22 that controls the MC via the input/output circuit 7.

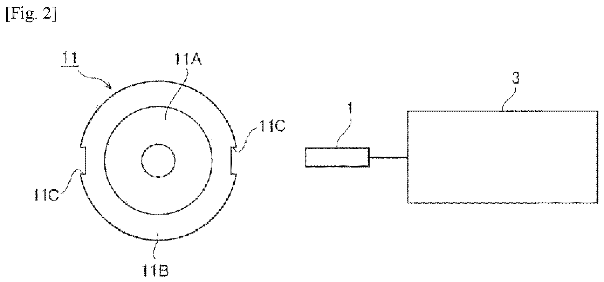

Fig. 2 is a plan view of the tool holder 11 having a notch in the flange portion 11B.

The shape of the tool holder 11 is approximately the same because the outer circumferential shapes of the fitting portion 11A and the flange portion 11B are standardized. Therefore, by measuring the outer circumferential shape of the flange portion 11B, the attachment state of the tool holder 11 can be determined. The outer circumferential shape is determined by rotating the tool holder 11 once and measuring the distance d. As shown in Fig. 2, generally, two notches 11C for chucking are often formed on the outer circumferential surface of the flange portion 11B of the tool holder 11.

The CPU 6 obtains and stores a basic eccentricity vector unique to the tool holder from measurement data during setup (measurement data A) of the tool holder 11 attached without any chuck errors (attachment abnormalities). Then, the CPU 6 obtains a measured eccentricity vector from the measurement data during machining (measurement data B). The CPU 6 compares the basic eccentricity vector and the measured eccentricity vector to calculate a true eccentricity vector. Then, the CPU 6 determines the eccentricity from the true eccentricity vector, and determines whether there is a chuck error (attachment abnormality). By doing the above, even if the sensor 1 is an eddy current sensor, the eccentricity inherent in the tool holder 11 due to magnetization, thickness, and the like can be canceled, and the eccentricity related to displacement can be calculated more accurately.

By the way, in order to compare the measurement data during setup (measurement data A) and the measurement data during machining (measurement data B), it is necessary to match their phases (the angle of the tool holder, which is the starting point of comparison). When the tool holder 11 has a notch 11C, the phase can be corrected (specifically, the 0-degree position can be determined) based on the detection signal from the notch 11C.

However, when there are two or more notches 11C, it is necessary to determine which of the two notches 11C to correct the phase based on (which one is located at the 0-degree position). However, the measurement by the sensor 1 may cause fluctuations or timing shifts. In addition, if the notches 11C are located at 180-degree symmetrical positions, measurement data close to 180-degree rotational symmetry will appear, and it is difficult to determine the phase simply by comparing the measurement data during setup and the measurement data during machining.

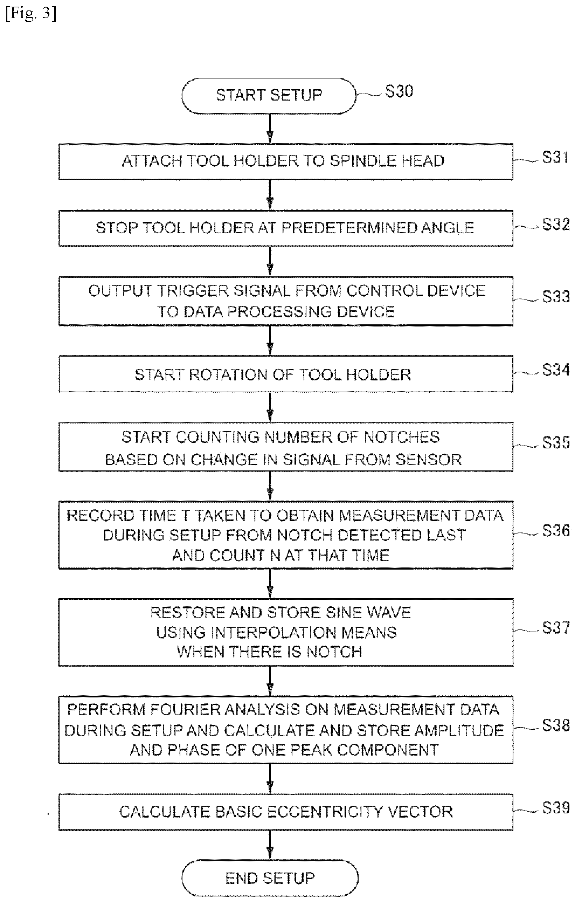

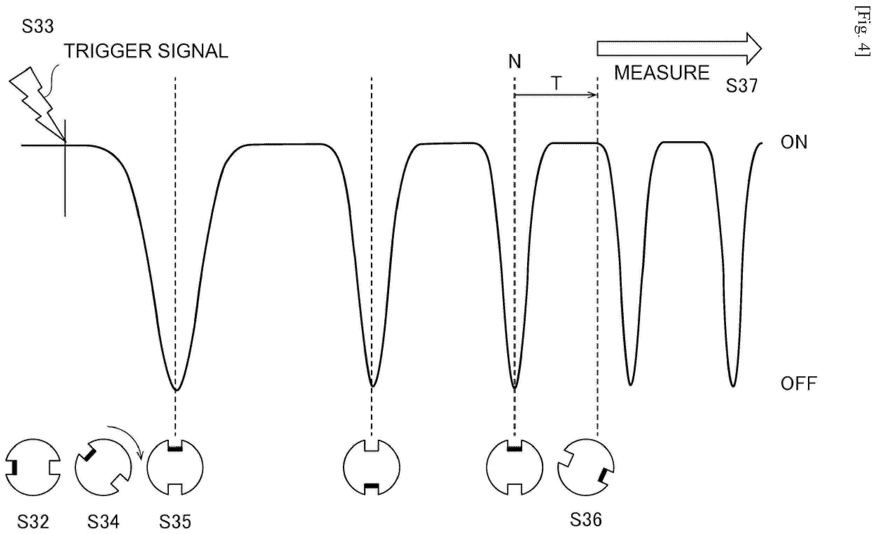

Fig. 3 is a flowchart of the acquisition of measurement data during setup, and Fig. 4 is a time chart of the acquisition of measurement data during setup and machining. During machining, after setup is performed, the tool holder 11 which the tool 9 is attached is attached to the spindle 26 by an ATC device, and measurement is started. In Fig. 4, the horizontal axis is time, the upper part shows conceptual changes in the measurement data from the sensor 1, and the lower part shows the rotation angle of the tool holder 11 and the orientation of the notch 11C. Further, S32 and the like indicate the correspondence with the steps in the flowchart of Fig. 3.

First, setup is performed to obtain a basic eccentricity vector (step S30). The setup is performed before the MC starts machining the workpiece. First, the tool holder 11 is attached to the spindle 26 (step S31). Since this is before the start of machining, chips will not be caught between the fitting portion 11A and the fitted portion 26A, and the tool holder 11 will be attached to the spindle 26 without chuck errors (attachment abnormalities). The control device 22 once rotates the tool holder 11 in this state, and stops the tool 9 (that is, the tool holder 11) at a predetermined angle (step S32).

Next, the control device 22 outputs a trigger signal for starting counting the number of notches 11C to the data processing device 3 (step S33), and starts rotating the tool holder 11 and the tool 9 (step S34). The measurement data from the sensor 1 changes from ON to OFF at the position of the notch 11C, as shown in Fig. 4, regardless of the sensor type. The data processing device 3 starts counting the number of notches 11C based on the change in the signal from the sensor 1 (step S35). Note that the measurement of the distance d for chuck error determination starts from the time when the rotation of the tool holder 11 and the tool 9 becomes stable.

The data processing device 3 stores the time T taken for the sensor to the measurement data during setup (measurement data A) from the time when the notch 11C is detected last and the count N at that time after rotating the tool holder 11 at least once (step S36). In other words, the notch count N counted until the measurement data during setup (measurement data A) is acquired and the time T that has elapsed until the measurement data A is acquired after the notch is detected last are stored.

The measurement data during setup is the measurement data from the sensor 1 after step S36. This measurement data is obtained after rotating the tool holder 11 at least once, but may be obtained after rotating the tool holder 11 multiple times in order to improve accuracy. Alternatively, the measurement data may be an average of a plurality of pieces of measurement data.

Even if the tool 9 (that is, the tool holder 11) is stopped at a predetermined angle and the rotation of the tool holder 11 is started, the measurement for determining a chuck error is performed after the rotation becomes stable. Therefore, in order to compare the measurement data A during setup and the measurement data B during machining, it is necessary to find the starting position for acquiring the pieces of measurement data in a stable rotation state, that is, a state where the tool holder 11 is rotated, and match the pieces of measurement data.

In the present detection method, the count N of the notches 11C and the time T that has elapsed after the notch was detected last are used to determine the starting position of acquiring this measurement data. By doing so, the measurement start position can be accurately determined.

In addition to the above, the waveform during setup measurement and the waveform of the measurement data during machining may be compared, and phases may be finely adjusted based on the shapes of the waveforms, for example, detection signal derived from the notch 11C as shown in Fig. 3. By using the count N of the notches 11C and the time T that has elapsed after the notch was detected last, even if there are multiple notches 11C in the tool holder 11, the detection signal derived from the notch which must be used for final fine adjustment can be determined. Thus, the phase can be easily corrected by comparing the waveforms.

Since the time T is originally short because it is the time elapsed after the notch was detected last, and the rotation is almost stable, there is almost no deviation in the time T between during setup and during machining which will be described later. Similarly, there is no difference in the count N until the rotation becomes stable between during setup and during machining which will be described later.

By determining the measurement data acquisition start position as described above, the accuracy is improved, for example, compared to simply determining the acquisition start position based on the time T₀ which is the time to the start of measurement data acquisition from the start of rotation (the time T₀ is longer and has higher possibility of occurrence of deviation ).

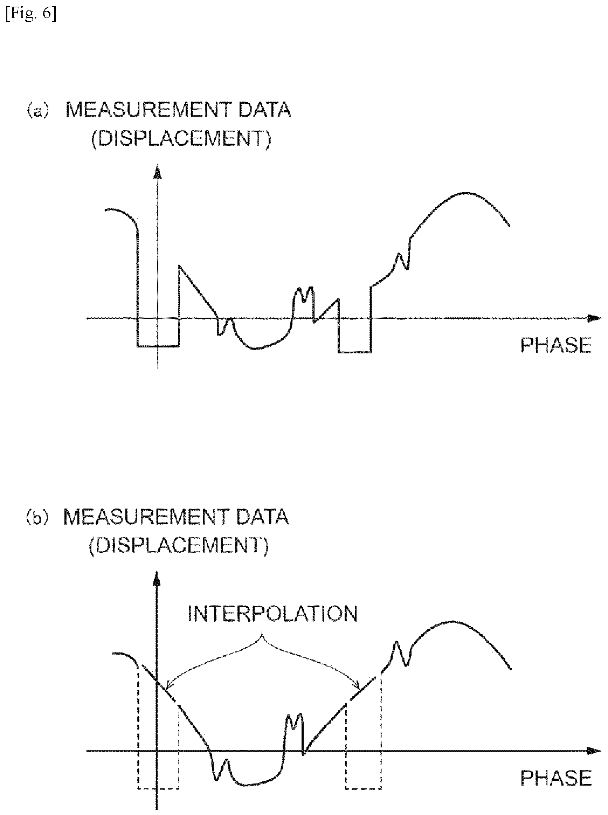

Fig. 6 is a graph showing an example of measurement data for one rotation. In Fig. 6, the horizontal axis shows the phase, and the vertical axis shows the displacement measured by the sensor 1. When there are two notches 11C in the flange portion 11B of the tool holder 11, the measurement data for one rotation includes a region where the measurement data derived from the notch 11C is "OFF" as shown in Fig. 6(a), for example. In the figure, an approximately rectangular recessed region is the region where the measurement data derived from the notch 11C is "OFF".

Returning to Fig. 3, if there is a notch 11C, the data processing device 3 uses an interpolation means to restore a sine wave from the measurement data during setup obtained in step S36, and stores the sine wave (step S37). Fig. 6(b) is a graph showing the measurement data after linear interpolation is performed for part of the notch 11C by the interpolation means in the CPU 6. Note that the measurement data interpolation method may be spline interpolation, Lagrangian interpolation, polynomial interpolation, Newton interpolation, Neville interpolation, continued fraction interpolation, or the like.

Next, the data processing device 3 performs Fourier analysis (FFT analysis) on the interpolated measurement data A during setup and calculates and stores the amplitude and phase of one peak component in the waveform of the measurement data (step S38). A basic eccentricity and basic eccentricity vector are calculated from the obtained amplitude and phase (step S39), and are stored to end the setup.

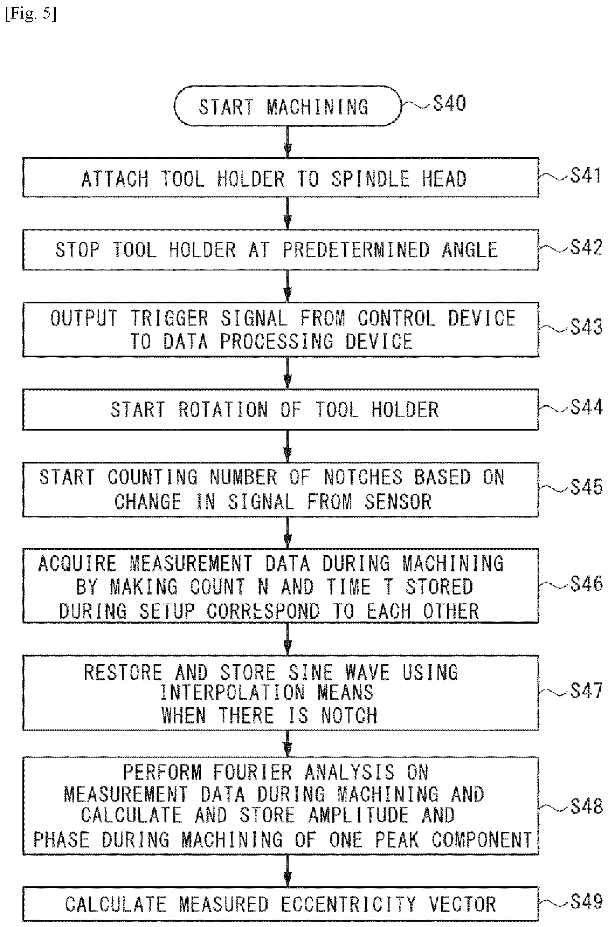

Fig. 5 is a flowchart during machining, and since steps S40 to S45 are performed in the same procedure as the flowchart during setup shown in Fig. 3, the description thereof will be omitted. The data processing device 3 causes the sensor 1 to acquire the measurement data during machining (measurement data B) by making the count N counted and stored during setup and the time T correspond to each other (step S46). Similarly to the measurement data during setup, the measurement data during machining is acquired after the tool holder 11 is rotated once. In order to improve accuracy, the measurement data may be acquired after rotating the tool holder 11 multiple times.

In addition to the above, using the measurement data during setup and the measurement data during machining (both before interpolation), the phase may be corrected (the 0-degree position may be corrected) based on the detection signal of the notch 11C.

Next, when there is a notch 11C, the data processing device 3 restores a sine wave using the interpolation means from the measurement data during machining obtained in step S46, and stores the sine wave (step S47), similarly to during setup. Next, the data processing device 3 performs Fourier analysis (FFT analysis) on the interpolated measurement data during machining, and calculates and stores the amplitude and phase during machining of one peak component (step S48). A measured eccentricity and a measured eccentricity vector are calculated from the amplitude and phase during machining (step S49).

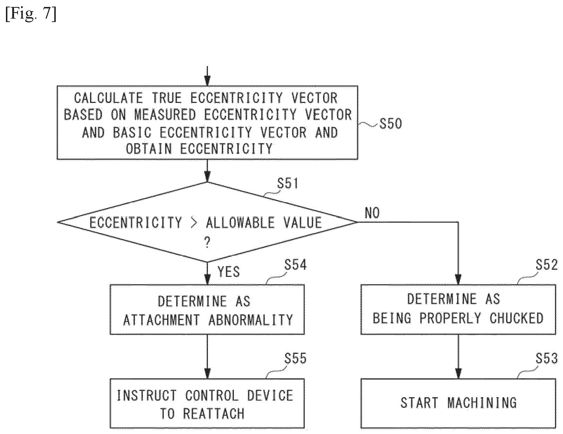

Fig. 7 is a flowchart for determining a chuck error based on a true eccentricity, which is performed subsequent to the flowchart in Fig. 5. Determination of chuck errors (attachment abnormalities) is performed based on the basic eccentricity vector (Fig. 3) indicating the eccentricity of the tool holder 11 attached without any chuck error and the measured eccentricity vector (Fig. 5) obtained from the measurement data during machining. Specifically, the difference between the basic eccentricity vector and the measured eccentricity vector is calculated by vector calculation and is taken as the true eccentricity vector, and the true eccentricity which is the magnitude of the true eccentricity vector is calculated (step S50).

The data processing device 3 determines a chuck error (attachment abnormality) based on the true eccentricity (step S51). As a result, if it is determined that the chucking is properly performed (true eccentricity ≤ allowable value) (step S52), machining is directly started (step S53). If the true eccentricity exceeds the allowable value, it is determined that a chuck error (attachment abnormality) has occurred (step S54). In this case, the data processing device 3 instructs the control device 22 to reattach the tool holder 11 or to confirm the attachment state (step S55).

According to the present embodiment, a chuck error (attachment abnormality) is determined based on the "true eccentricity" obtained by removing the eccentricity inherent in the tool holder 11, so that more accurate detection can be performed. Further, in the present embodiment, since the direction of eccentricity can be specified from the true eccentricity vector, the position of trapped chips and the like can also be specified.

Note that the eccentricity may be calculated from the average value of the pieces of measurement data A and B measured multiple times. In this way, reliability is improved and more accurate determination can be performed.

The measurement data during setup and the measurement data during machining are originally based on the data obtained by the sensor 1 measuring the outer circumferential surface of the flange portion 11B, so they originally have similar waveforms. Therefore, if the measurement data is obtained by matching the count N and time T during setup and machining, the phases of both pieces of measurement data can be corrected without any more complicated processing.

Furthermore, if there are two notches 11C and they are located at 180-degree symmetrical positions, the "OFF" region will appear in the measurement data at a corresponding period. From the waveform of the measurement data, it is difficult to identify from which of the two notches 11C this "OFF" region originates. However, since the data processing device 3 makes the counts N taken to obtain the measurement data during setup and during machining match each other after stopping the tool holder at a predetermined angle, it is possible to differentiate them even in this case. Furthermore, setting the counts N to be the same during setup and during machining is useful for phase adjustment not only when there are two notches 11C, but also when there is one notch 11C, there are three notches 11C at 120-degree intervals, and there are more notches 11C.

In the measurement data, when a shake occurs, the fundamental frequency component (first-order component) obtained by Fourier analysis changes significantly. Further, changes in the measurement data from the sensor 1 shown in Figs. 4 and 6 may be slower depending on the sensor type. For example, in the case of an eddy current sensor, as the distance d increases, the difference (amplitude) between ON and OFF in the measurement data of Fig. 4 becomes smaller and becomes less clear. However, since the data processing device 3 only counts the number of notches 11C based on the change in the signal from the sensor 1, the count is not affected by the amplitude information and therefore, an accurate phase can be detected. Similarly, when the sensor 1 is an optical or laser sensor, the difference (amplitude) between ON and OFF of the measurement data becomes small and becomes unclear in a harsh environment. However, if the pulse shaping is performed by a waveform shaping circuit or the like when counting the notch 11C, an accurate count can be obtained.

Furthermore, in the present embodiment, the eccentricity is obtained by measuring the displacement of the outer circumference of the tool holder 11, performing Fourier analysis on the measurement data to extract one peak component, and obtaining the amplitude value thereof. However, the method for obtaining the eccentricity is not limited to this method. For example, the maximum value and minimum value of the measurement data may be calculated and the eccentricity may be calculated from the difference between them.

Further, in the present embodiment, the flange portion 11B of the tool holder 11 is used as the measurement point of the sensor 1. However, the measurement point of the sensor 1 is not limited to this, and may be changed appropriately depending on the measurement situation and the like. For example, the measurement point may be the cutting edge of the tool 9 (the part where the workpiece is cut). When the cutting edge of the tool 9 is used as a measurement point, the eccentricity of the part to be directly machined can be measured, and chuck errors can be detected more reliably. In this case, the position of the tool may finally be adjusted based on the measurement data before interpolation.

Furthermore, if the sensor 1 is an eddy current sensor, it is desirable to attach the sensor to the head 27 to which the spindle 26 is attached in order to shorten the measurement distance, but the attachment location of the sensor 1 is not limited to this. In particular, according to the present embodiment, even if the sensor 1 is an optical or laser sensor, which is vulnerable to harsh environments where water, oil, and the like are scattered, the distance d can be increased to fix and attach the sensor 1 at a predetermined position other than the head 27. Therefore, when the sensor 1 is an optical or laser sensor, it can be installed at any position. In particular, the sensor 1 can be easily installed at a position that is not affected by coolant (a position that is not exposed to coolant) in order to ensure more stable and highly accurate measurements.

Further, although the present embodiment has been described as being applied to an MC, it can be applied to any machine tool that uses an ATC device.

### (Displacement detection device and machine tool having the same)

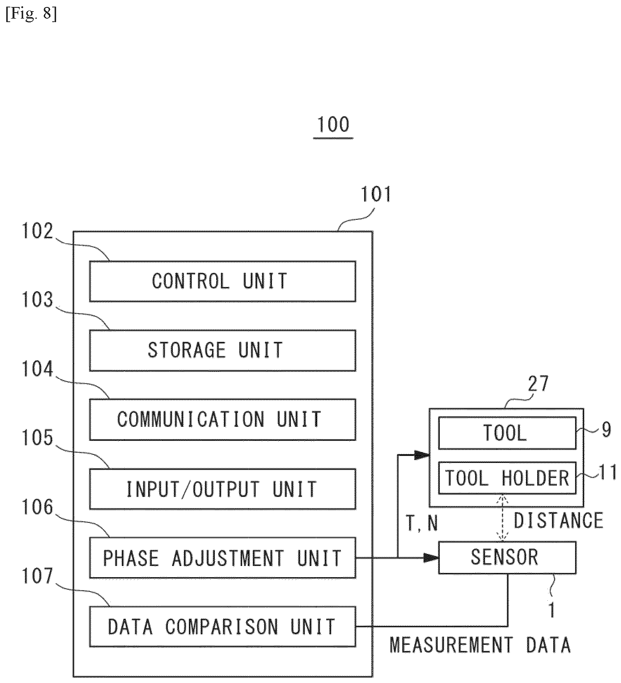

Fig. 8 is a functional block diagram of a machine tool equipped with a displacement detection device according to an embodiment of the present invention. A machine tool 100 includes a displacement detection device 101, a head 27 to which a spindle is attached, and a sensor 1. The head 27 is equipped with a tool holder 11 attached to the spindle and a tool 9 attached to the tool holder 11. Note that the structures of the sensor 1, the head 27, the tool holder 11, the tool 9, and the like are the same as those of the machine tool equipped with the tool holder attachment state detection device 50, and therefore, the description thereof will be omitted.

The displacement detection device 101 includes a control unit 102, a storage unit 103, a communication unit 104, an input/output unit 105, a phase adjustment unit 106, and a data comparison unit 107.

The control unit 102 includes a processor as hardware, and controls each unit of the displacement detection device 101 by causing the processor to execute a program stored in a storage device of the storage unit 103, which will be described later.

The processor included in the control unit 102 includes a microprocessor, a processor core, a multiprocessor, an ASIC (application-specific integrated circuit), an FPGA (field programmable gate array), a GPGPU (General-purpose computing on graphics processing units), and the like.

The storage unit 103 includes a storage device as hardware, and provides a work area for the processor, stores and reads programs for controlling each unit of the displacement detection device 101, stores and reads the measurement data from the sensor 1, stores and reads the time T and count N and the like.

The storage device included in the storage unit 103 includes, for example, ROM (Read Only Memory), RAM (Random Access Memory), HDD (Hard Disk Drive), flash memory, SSD (Solid State Drive), and the like.

The communication unit 104 is configured to include a communication interface, and performs transmission and reception of various pieces of data between the displacement detection device 101 and an external network and an external device under the control of the control unit 102. Further, the input/output unit 105 is configured to include an input/output interface, and receives the input of instructions to the displacement detection device 101 and outputs displacement detection results.

The input device connected to the input/output unit 105 may be a keyboard, a mouse, a scanner, a touch panel, or the like. Further, the display device connected to the input/output unit 105 may be a liquid crystal display, an organic EL (Electro Luminescence) display, or the like. Further, the display device may be configured integrally with the input device. In this case, the display device may be a touch panel display that provides a GUI (Graphical User Interface).

Note that the displacement detection device 101 may not have the communication unit 104 and the input/output unit 105.

The displacement detection device 101, which includes a processor, a storage device, a communication interface, and an input/output interface, is typically a computer. Although the displacement detection device 101 is provided separately from a computer (not shown) that controls the machine tool 100, the present invention is not limited to the above, and the displacement detection device 101 may further have a function of controlling the machine tool 100 of the present invention. In other words, the computer that controls the machine tool 100 may have the function of the displacement detection device 101.

Next, the phase adjustment unit 106 is a function realized by the processor of the control unit 102 executing a program stored in the storage device of the storage unit 103.

The phase adjustment unit 106 controls the sensor 1 that measures the outer circumferential shape of the flange portion of the tool holder 11, and adjusts the timing of acquiring the measurement data (measurement data A and B). Note that the structure and function of the sensor 1 are the same as those of the sensor included in the tool holder attachment state detection device 50, and the description thereof will be omitted.

In a reference state (for example, "during setup"), the phase adjustment unit 106 rotates the tool holder after stopping it at a predetermined angle, starts counting the number of notches formed in the flange portion, rotates the tool holder at least once, and then, causes the sensor to acquire the measurement data (measurement data A) in a state where the rotation becomes stable. The phase adjustment unit 106 detects the time T (T_{A}) taken to obtain the measurement data A from the notch detected last and the count N (N_{A}) at that time, and stores them in the storage unit 103.

When detecting the displacement (for example, "during machining"), the tool holder is rotated after being stopped at a predetermined angle, the counting of the number of notches formed in the flange portion is started, and after the tool holder is rotated at least once, the sensor acquires the measurement data B. At this time, the time T taken to obtain the measurement data from the sensor from the notch detected last and the count N at that time are made to match the time T_{A} and the count N_{A}, respectively.

In other words, the measurement data B is acquired by the sensor so that the time T and count N match the time T_{A} and count N_{A}, respectively.

When acquiring the pieces of measurement data A and B, the phase adjustment unit 106 rotates the tool holder after stopping it at a predetermined angle (the same angle), starts counting the number of notches formed in the flange portion, rotates the tool holder at least once, and then, makes the times T taken to obtain the pieces of measurement data from the sensor from the notch detected last (the times T taken to obtain the measurement data from the time when the notch was detected last) and the counts N at that time match each other. As a result, it is not necessary to match the phases of the pieces of obtained measurement data. Note that the details of the above phase matching are the same as those in the tool holder attachment state detection device 50 that has already been described, so the description will be omitted.

The displacement of the tool holder 11 can be detected by measuring a change (shift) in the measurement data from the sensor 1 that measures the outer circumferential shape. However, in order to measure the shift in measurement data, it is necessary to match the phases of these pieces of measurement data.

Since the displacement detection device 101 includes the phase adjustment unit 106, even if pieces of measurement data have mutual changes and it is unclear as to the reference point to compare them, it is possible to easily obtain pieces of measurement data with matched phases without any need to perform difficult phase matching based on waveforms.

The data comparison unit 107 is a function realized by the processor of the control unit 102 executing a program stored in the storage device of the storage unit 103. The data comparison unit 107 compares the measurement data A and the measurement data B to detect a displacement.

As one form of the displacement detected by the data comparison unit 107, it is preferable to be the true eccentricity already described in one embodiment. By calculating the true eccentricity from the pieces of measurement data A and B, the relative displacement can be detected after canceling the eccentricity inherent to the tool holder 11.

Although the method for calculating the true eccentricity from the pieces of measurement data A and B has already been explained, one example thereof will be briefly explained again. The data comparison unit 107 interpolates the measurement data A in a reference state (for example, "during setup") as necessary, and calculates the amplitude and phase of one peak component by FFT analysis. Further, the data comparison unit 107 calculates an eccentricity vector and an eccentricity, which is the magnitude thereof, from the amplitude and phase of one peak component, for example.

Next, the data comparison unit 107 interpolates the measurement data B during displacement detection (for example, "during machining") as necessary, and calculates the amplitude and phase of one peak component by FFT analysis. Furthermore, the data comparison unit 107 calculates the eccentricity vector and the eccentricity using the same method as in the processing of the measurement data A.

The data comparison unit 107 calculates the difference with each of the eccentricity vectors by vector calculation, and calculates the true eccentricity (relative eccentricity). The true eccentricity reflects the displacement of the tool holder 11 from the reference state, and for example, by comparing the true eccentricity with a predetermined threshold, it is possible to determine whether the tool holder 11 has been displaced.

### (Displacement detection method)

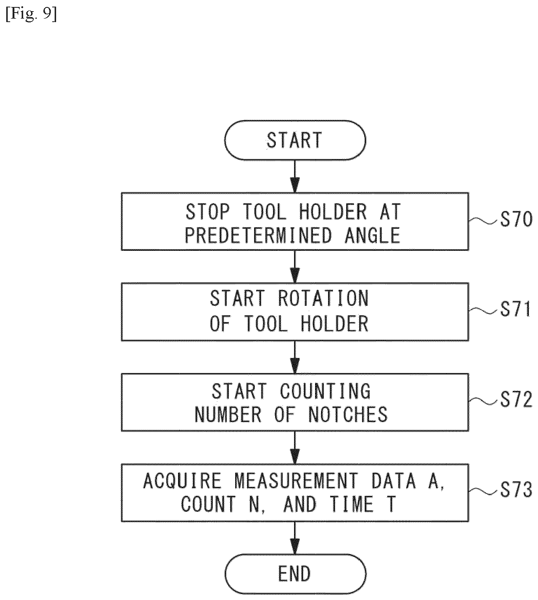

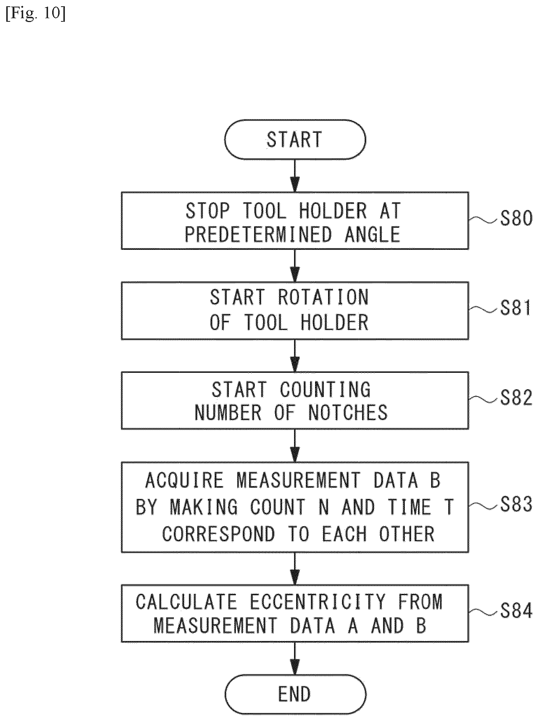

Next, a displacement detection method using the displacement detection device 101 will be explained. Figs. 9 and 10 are flowcharts of the displacement detection method.

First, Fig. 9 is a flowchart for obtaining the measurement data A in the reference state as preparation for displacement detection.

The method for acquiring the measurement data A is the same as the method for acquiring the measurement data "during setup" described above.

First, in step S70, the tool holder 11 is stopped at a predetermined angle. The angle at which the tool holder is stopped may be any value, as long as it is the same as the angle at which it is stopped before the acquisition of the measurement data B.

The reference state is a state that should serve as a reference for displacement detection, and for example, the reference state is preferably attained before machining, that is, during setup of the machine tool, but may also be attained after the start of machining.

Next, in step S71, rotation of the tool holder 11 is started. When the tool holder 11 starts rotating, the output of the sensor 1 changes from ON to OFF with passing through the notch, making it possible to count the number of notches. When the rotation of the tool holder 11 is started, counting of the number of notches is also started (step S72).

Next, in step S73, when the rotation of the tool holder 11 becomes stable, the measurement data A is acquired. At this time, the time T_{A} from the detection of the notch detected last to the acquisition of the measurement data is also acquired. In addition, the count N_{A} of notches until the acquisition of the measurement data is also acquired. That is, in this step, the measurement data A, the time T (T_{A}), and the count N (N_{A}) are acquired.

Although the acquisition flow of the measurement data A has been described so far, the displacement detection method according to the embodiment of the present invention may not include the procedure for acquiring the measurement data A described above. That is, the measurement data A, the time T_{A}, and the count N_{A} may be obtained and stored in advance. In this case, the measurement data A, the time T_{A}, and the count N_{A} obtained in advance may be used for displacement detection without newly obtaining the measurement data A. Note that the tool holder 11 used to obtain the measurement data A and measurement data B is the same.

Further, after step S73, the measurement data may be subjected to Fourier analysis (FFT analysis) to calculate the amplitude and phase of one peak component. Furthermore, the eccentricity and the eccentricity vector may be calculated from this amplitude and phase.

Fig. 10 is a flowchart of a displacement detection method for detecting a displacement of a tool holder.

First, in step S80, the tool holder is stopped at a predetermined angle. This angle is the same angle as when acquiring the measurement data A.

One form of timing for displacement detection is during or after machining of a workpiece when the measurement data A is acquired during setup. As already explained, in a machine tool such as a machining center (MC), a workpiece is machined while changing tools. In this case, chips or the like may be caught in the chuck portion during or after machining, resulting in a chuck failure, and the tool holder 11 may become eccentric. The present displacement detection method can easily detect the relative eccentricity (displacement) of the tool holder 11 from the reference state as described above with high accuracy.

Next, in step S81, rotation of the tool holder is started, and along with this, counting of the number of notches is also started (step S82).

Next, in step S83, the measurement data B is acquired.

The measurement data B is obtained by making the time T and count N match the time T_{A} and count N_{B}, respectively. That is, after the tool holder 11 is stopped at a predetermined angle, the tool holder starts rotating and rotates until the count N_{A} is reached. The measurement data B is acquired when the time T_{A} has elapsed after the count N_{A} is reached.

Since the present displacement detection method includes step S83, the phases of the acquired measurement data A and measurement data B are matched. If the tool holder 11 is displaced due to a chuck error or the like between during the reference state and during detection, and the waveforms of the pieces of measurement data change, it may be difficult to compare these waveforms and match the phases. However, in this displacement detection method, phase matching can be performed without the need to directly compare the waveforms (pieces of measurement data whose phases are already matched are acquired).

Next, in step S84, the true eccentricity is calculated from the pieces of measurement data A and B. The method for calculating the true eccentricity has already been explained. In this way, the displacement of the tool holder 11 can be detected. The detected displacement (true eccentricity) can be used for determining the attachment state of the tool holder and the like as described above.

As already explained, the true eccentricity can be calculated using various methods. For example, the maximum value and the minimum value of the measurement data may be calculated and the true eccentricity may be calculated from the difference between them.

### [Reference Signs List]

- 1: Sensor
- 3: Data processing device
- 4: A/D converter
- 5: Memory
- 6: CPU
- 7: Input/output circuit
- 9: Tool
- 11: Tool holder
- 11A: Fitting portion
- 11B: Flange portion
- 11C: Notch
- 22: Control device
- 26: Spindle
- 26A: Fitted portion
- 27: Head
- 50: Tool holder attachment state detection device
- 100: Machine tool
- 101: Displacement detection device
- 102: Control unit
- 103: Storage unit
- 104: Communication unit
- 105: Input/output unit
- 106: Phase adjustment unit
- 107: Data comparison unit
- N: Count
- d: Distance

## Claims

1. A displacement detection method for detecting a relative displacement from a reference state of a tool holder (11) that is attached to a spindle (26) and rotates integrally with the spindle (26) by a comparison of measurement data from a sensor (1) that measures an outer circumferential shape of a flange portion (11B) of the tool holder (11) with measurement data at the time of displacement detection,
wherein the sensor (1) is a measuring means that continuously measures a distance (d) from a certain measurement point to an outer circumferential surface of the tool holder (11) as an electrical signal in a state where the tool holder (11) is rotated
wherein acquisitions of both the measurement data in the reference state and the measurement data at the time of displacement detection comprise the following steps:
• the tool holder (11) is stopped at a predetermined angle which serves as a starting point for acquiring a count (N) of the notches and a time (T) in the subsequent steps, wherein each measurement data from the sensor (1) is obtained by rotating the tool holder (11) after stopping the tool holder at the predetermined angle,
• next starting counting the number of notches (11C) formed in the flange portion (11B),
• acquisition of a time (T) taken to obtain the pieces of measurement data from the (1) from the notch (11C) detected last, when the notch (11C) was detected last, and a count (N) at that time after rotating the tool holder (11) at least once, which are acquired as by the sensor (1) as the measurement data from the sensor (1) and a change in distance (d) from the certain measurement point to the outer circumferential surface of the tool holder (11) is detected by comparing the acquired measurement data at the time of displacement detection and the measurement data in the reference state.

2. The displacement detection method according to claim 1, wherein
the comparison is performed by comparing an eccentricity vector which is obtained by performing Fourier analysis on the each piece of measurement data from with an eccentricity vector which is obtained by performing Fourier analysis on the each piece of measurement data in the reference state and calculating an amplitude and a phase of one peak component.

3. A displacement detection device (101) that detects a relative displacement from a reference state of a tool holder (11) that is attached to a spindle (26) and rotates integrally with the spindle (26), the device (101) comprising:
a sensor (1) configured to continuously measure a distance (d) from a certain measurement point to an outer circumferential surface of the tool holder (11) as an electrical signal in a state where the tool holder (11) is rotated,
a data comparison unit (107) configured to detect a displacement by comparing measurement data from the sensor (1) that measures an outer circumferential shape of a flange portion (11B) of the tool holder (11) at the time of displacement detection with measurement data in the reference state; and
a phase adjustment unit (106) configured to adjust an acquisition timing of the measurement data, wherein
the phase adjustment unit (106) is configured to rotate the tool holder (11) after stopping the tool holder (11) at a predetermined angle, to start counting the number of notches (11C) formed in the flange portion (11b), to make a time (T) taken to obtain each piece of measurement data from the sensor (1) from the notch (11C) detected last and a count (N) at that time correspond to each other after rotating the tool holder (11) at least once so that the sensor (1) acquires the each piece of measurement data,
wherein the displacement detection device (101) comprises a control unit (102) configured to perform a displacement detection method according to claim 1 or 2.

4. The displacement detection device (101) according to claim 3, wherein
the data comparison unit (107) performs Fourier analysis on each piece of the measurement data from the sensor (1) and calculates an eccentricity vector from an amplitude and a phase of one peak component and performs analysis on each piece of the measurement data in the reference state and calculates eccentricity vectors from an amplitude and phase of one peak component and compares the eccentricity vectors.

5. A machine tool (100) comprising the displacement detection device (101**)** according to claim 3 or 4.

## Patentansprüche

1. Verschiebungserkennungsverfahren zum Erkennen einer relativen Verschiebung eines Werkzeughalters (11), der an einer Spindel (26) angebracht ist und sich einteilig mit der Spindel (26) dreht, von einem Bezugszustand mittels eines Vergleichs von Messdaten von einem Sensor (1), der eine äußere Umfangsform eines Flanschabschnitts (11B) des Werkzeughalters (11) misst, mit Messdaten zum Zeitpunkt der Verschiebungserkennung,
wobei der Sensor (1) ein Messmittel ist, das ununterbrochen einen Abstand (d) von einem bestimmten Messpunkt zu einer äußeren Umfangsoberfläche des Werkzeughalters (11) als ein elektrisches Signal in einem Zustand misst, in dem der Werkzeughalter (11) gedreht wird,
wobei Erfassungen von sowohl den Messdaten in dem Bezugszustand als auch den Messdaten zum Zeitpunkt der Verlagerungserkennung die folgenden Schritte umfassen:
• der Werkzeughalter (11) wird an einem vorbestimmten Winkel angehalten, der als ein Anfangspunkt zum Erfassen einer Zählung (N) der Kerben und einer Zeit (T) in den nachfolgenden Schritten dient, wobei jedes Messdatenelement von dem Sensor (1) mittels Drehens des Werkzeughalters (11) nach dem Anhalten des Werkzeughalters an dem vorbestimmten Winkel erhalten wird;
• als Nächstes Beginnen des Zählens der Anzahl von Kerben (11C), die in dem Flanschabschnitt (11B) gebildet sind,
• Erfassen einer Zeit (T), die zum Erhalten der Messdatenelemente von der zuletzt erfassten Kerbe (11C) erforderlich war, als die Kerbe (11C) das letzte Mal erkannt wurde, und einer Zählung (N) zu diesem Zeitpunkt nach dem zumindest einmaligen Drehen des Werkzeughalters (11), die von dem Sensor (1) erfasst werden, als die Messdaten von dem Sensor (1)
und eine Änderung beim Abstand (d) von dem bestimmten Messpunkt zu der äußeren Umfangsoberfläche des Werkzeughalters (11) wird mittels Vergleichens der erfassten Messdaten zum Zeitpunkt der Verschiebungserkennung und der Messdaten im Bezugszustand erkannt.

2. Verschiebungserkennungsverfahren nach Anspruch 1, wobei der Vergleich mittels Vergleichens eines Exzentrizitätsvektors durchgeführt wird, der mittels Durchführens von Fourier-Analyse auf jedem Messdatenelement mit einem Exzentrizitätsvektor erhalten wird, der mittels Durchführens von Fourier-Analyse auf jedem Messdatenelement im Bezugszustand und Berechnens einer Amplitude und einer Phase einer Spitzenkomponente erhalten wird.

3. Verschiebungserkennungsvorrichtung (101), die eine relative Verschiebung eines Werkzeughalters (11), der an einer Spindel (26) angebracht ist und sich einteilig mit der Spindel (26) dreht, von einem Bezugszustand erkennt, wobei die Vorrichtung (101) umfasst:
einen Sensor (1), der so ausgestaltet ist, dass er ununterbrochen einen Abstand (d) von einem bestimmten Messpunkt zu einer äußeren Umfangsoberfläche des Werkzeughalters (11) als ein elektrisches Signal in einem Zustand misst, in dem der Werkzeughalter (11) gedreht wird,
eine Datenvergleichseinheit (107), die so ausgestaltet ist, dass sie eine Verschiebung mittels Vergleichens von Messdaten von dem Sensor (1), der eine äußere Umfangsform eines Flanschabschnitts (11B) des Werkzeughalters (11) zum Zeitpunkt der Verschiebungserkennung misst, mit Messdaten in dem Bezugszustand erkennt; und
eine Phasenanpassungseinheit (106), die so ausgestaltet ist, dass sie einen Erfassungszeitpunkt der Messdaten anpasst, wobei die Phasenanpassungseinheit (106) so ausgestaltet ist, dass sie den Werkzeughalter (11) nach dem Anhalten des Werkzeughalters (11) an einem vorbestimmten Winkel dreht, um das Zählen der Anzahl von Kerben (11C) zu beginnen, die in dem Flanschabschnitt (11b) gebildet sind, sodass bewirkt wird, dass eine Zeit, die erforderlich war, um jedes Messdatenelement von dem Sensor (1) von der Kerbe (11C) zu erhalten, die zuletzt erkannt wurde, und eine Zählung (N) zu dieser Zeit nach dem zumindest einmaligen Drehen des Werkzeughalters (11) einander entsprechen, sodass der Sensor (1) jedes Messdatenelement erfasst,
wobei die Verschiebungserkennungsvorrichtung (101) eine Steuereinheit (102) umfasst, die so ausgestaltet ist, dass sie ein Verschiebungserkennungsverfahren nach Anspruch 1 oder 2 durchführt.

4. Verschiebungserkennungsvorrichtung (101) nach Anspruch 3, wobei die Datenvergleichseinheit (107) Fourier-Analyse auf jedem Messdatenelement von dem Sensor (1) durchführt und einen Exzentrizitätsvektor von einer Amplitude und einer Phase einer Spitzenkomponente berechnet und eine Analyse auf jedem Messdatenelement im Bezugszustand durchführt und Exzentrizitätsvektoren von einer Amplitude und Phase einer Spitzenkomponente berechnet und die Exzentrizitätsvektoren vergleicht.

5. Werkzeugmaschine (100), die die Verschiebungserkennungsvorrichtung (101) nach Anspruch 3 oder 4 umfasst.

## Revendications

1. Un procédé de détection de déplacement destiné à détecter un déplacement relatif par rapport à un état de référence d'un porte-outil (11) qui est fixé à une broche (26) et qui tourne solidairement avec la broche (26), par une comparaison de données de mesure provenant d'un capteur (1) qui mesure la forme circonférentielle extérieure d'une partie (118) formant bride du porte-outil (11) avec les données de mesure au moment de la détection du déplacement,
le capteur (1) étant un moyen de mesure qui mesure en continu une distance (4) entre un certain point de mesure et une surface circonférentielle extérieure du porte-outil (11), sous forme de signal électrique, alors que le porte-outil (11) est en rotation,
les acquisitions tant des données de mesure à l'état de référence que des données de mesure au moment de la détection de déplacement comprenant les étapes suivantes:
• le porte-outil (11) est arrêté à un angle prédéterminé qui sert de point de départ pour l'acquisition d'un nombre (N) d'encoches (T) et d'un temps dans les étapes suivantes, chaque donnée de mesure provenant du capteur (1) est obtenue en faisant tourner le porte-outil (11) après avoir arrêté le porte-outil à l'angle prédéterminé;
• ensuite, commencer à compter le nombre d'encoches (11C) formées dans la partie (11B) formant bride,
• acquérir un temps (T) nécessaire pour obtenir les données de mesure provenant du capteur (1) à partir de la dernière encoche (11C) détectée, au moment où cette encoche (11C) a été détectée pour la dernière fois, ainsi qu'un nombre (N) à ce moment-là après avoir fait tourner le porte-outil (11) au moins une fois, qui sont acquis par le capteur (1) en tant que données de mesure provenant du capteur (1),
et une variation de distance (d) entre un point de mesure donné et la surface circonférentielle extérieure du porte-outil (11) est détectée en comparant les données de mesure acquises au moment de la détection du déplacement et les données de mesure à l'état de référence.

2. Le procédé de détection de déplacement selon la revendication 1, dans lequel la comparaison est effectuée en comparant un vecteur d'excentricité, obtenu en effectuant une analyse de Fourier sur chacune des données de mesure, à un vecteur d'excentricité, obtenu en effectuant une analyse de Fourier sur chacune des données de mesure à l'état de référence, et en calculant l'amplitude et la phase d'une composante de crête.

3. Un dispositif de détection de déplacement (101) qui détecte un déplacement relatif par rapport à un état de référence d'un porte-outil (11) qui est fixé à une broche (26) et qui tourne solidairement avec la broche (26), le dispositif (101) comprenant:
un capteur (1), configuré pour mesurer en continu une distance (d) entre un certain point de mesure et une surface circonférentielle extérieure du porte-outil (11) sous la forme d'un signal électrique, alors que le porte-outil (11) est en rotation,
une unité (107) de comparaison de données, configurée pour détecter un déplacement en comparant les données de mesure provenant du capteur (1), qui mesurent la forme circonférentielle extérieure d'une partie (11B) formant bride du porte-outil (11) au moment de la détection du déplacement avec des données de mesure dans un état de référence; et
une unité (106) de réglage de phase, configurée pour ajuster le moment d'acquisition des données de mesure,
l'unité (106) de réglage de phase étant configurée pour faire tourner le porte-outil (11) après avoir arrêté le porte-outil (11) à un angle prédéterminé, pour commencer à compter le nombre d'encoches (11C) formées dans la partie (11B) formant bride, afin de faire correspondre l'un à l'autre le temps (T) nécessaire pour obtenir chaque donnée de mesure provenant du capteur (1) à partir de la dernière encoche (11C) détectée et un comptage (N) à ce moment-là après avoir fait tourner le porte-outil (11) au moins une fois, de sorte que le capteur (1) acquière chaque donnée de mesure,
dans lequel le dispositif de détection de déplacement (101) comprend une unité de commande (102) configurée pour mettre en œuvre un procédé de détection de déplacement selon la revendication 1 ou la revendication 2.

4. Le dispositif (101) de détection de déplacement selon la revendication 3, dans lequel l'unité (107) de comparaison de données effectue une analyse de Fourier sur chacune des données de mesure provenant du capteur (1) et calcule un vecteur d'excentricité à partir de l'amplitude et de la phase d'une composante de crête, et effectue une analyse sur chacune des données de mesure dans l'état de référence, et calcule des vecteurs d'excentricité à partir de l'amplitude et de la phase d'une composante de crête, et compare les vecteurs d'excentricité.

5. Une machine-outil (100) comprenant le dispositif (101) de détection de déplacement selon la revendication 3 ou la revendication 4.
